# EUROPEAN PATENT SPECIFICATION

(11) **EP 2 754 593 B1**
(45) Date of publication and mention of the grant of the patent: **12.10.2016**
(21) Application number: 13169052.1
(22) Date of filing: 23.05.2013
(51) Int. Cl.: B60T 11/04, F16C 1/10, F16C 1/26

(54) **Vehicle control system**
Fahrzeugsteuerungssystem
Système de commande de véhicule

(30) Priority: 15.01.2013 TW 102101471
(43) Date of publication of application: 16.07.2014
(73) Proprietor: Wen, Yuan-Hung, Hemei Town Chang hua (TW)
(72) Inventor: Wen, Yuan-Hung, Hemei Town Chang hua (TW)
(74) Representative: Lang, Christian

(56) References cited:
- EP-A1- 0 713 019
- EP-A1- 1 234 987
- FR-A1- 2 776 347

## Description

### BACKGROUND OF THE INVENTION

### Field of the Invention

The present invention relates to a control system, more particularly, to a vehicle control system.

### Description of the Prior Art

Generally, a cable applied to a brake or derailleur of a vehicle such as bicycle or motorcycle is constructed of a plurality of wires, and an outmost sheath is disposed around substantially an entire length of the cable. The brake or derailleur can be controllably driven through the cable driven by a brake lever or shift lever.

The cable, generally, is made by wringing so that it has a twisted circumferential surface, and the cable is telescoped by the outmost sheath along the entire length thereof. As such, it can causes great frictional resistance between the cable and the inner surface of the outmost sheath so as to disadvantage the operation and control of the brake; as the cable and the outmost sheath which always contact each other are used for a long time, the cable and/or the outmost sheath can be abraded and should be replaced. Additionally, water and dust can come into the gap between the cable and the outmost sheath easily, so that the cable is damped and rusted easily, and is not durable.

Besides, in some conventional structures, the outmost sheath is disposed around the cable between the brake lever (or shift lever) and a fixation portion of a bicycle, and disposed around the cable between the brake (or derailleur) and a fixation portion; however, the middle portion of the cable is completely exposed. This conventional structure might be operated with frictional resistance which is not very great; however, it still has problems of water and dust coming into the gap between the cable and the outmost sheath to cause damping and rusting to the cable, and the completely-exposed portion of the cable cannot be effectively isolated from water and dust and is without any protective member therearound, so that the cable is damped and rusted more easily and has very poor durability. Document EP0713019 discloses a dust protection requiring additional elements.

The present invention is, therefore, arisen to obviate or at least mitigate the above mentioned disadvantages.

### SUMMARY OF THE INVENTION

An object of the present invention is to provide a vehicle control system, in which a center line of the vehicle control system can be prevented from being damped and rusted so that the center line can function well and the durability of the vehicle control system is enhanced, and the friction caused due to the axial movement of the vehicle control system can be reduced so that the operated device can be operated easily, smoothly and precisely.

To achieve the above and other objects, a vehicle control system is for mounting to a vehicle, the vehicle has an operable portion, at least two fixation portions for holding the vehicle control system and an operated device, the operated device includes a brake, derailleur or fluid control device, and the vehicle control system includes a center line, a first sleeve and an outmost sheath.

Two ends of the center line are connected respectively to the operable portion and the operated device, and the operated device is controllably operated by the operable portion via the center line. The first sleeve is disposed around the center line, continuously extending between the operable portion and the operated device, and is slidable relative to the center line. The outmost sheath is disposed around the first sleeve, disposed between the operable portion and one of the fixation portions, and disposed between the operated device and the other fixation portion.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a drawing showing a vehicle control system applied to a bicycle according to a preferred embodiment of the present invention;
Fig. 2 is a partial view of Fig. 1;
Fig. 3 is a drawing showing a vehicle control system according to a preferred embodiment of the present invention;
Fig. 4 is a partial cross-sectional view of a vehicle control system according to a preferred embodiment of the present invention;
Fig. 5 is a partial view of a vehicle control system according to an alternative embodiment of the present invention; and
Fig. 6 is a drawing showing a vehicle control system applied to a bicycle according to another embodiment of the present invention.

### DETAILED DESCRIPTION OF THE PREFERRED EMBODIMENTS

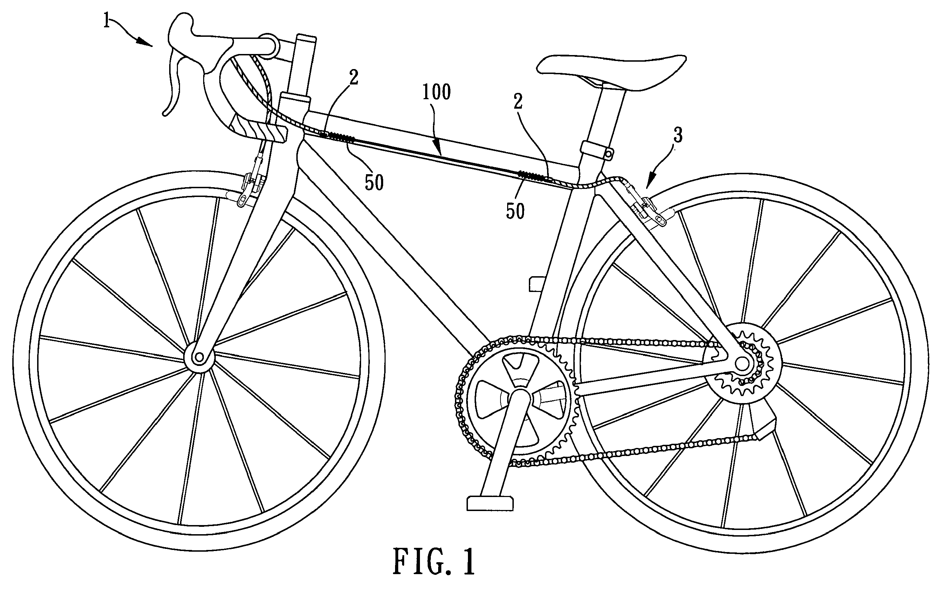

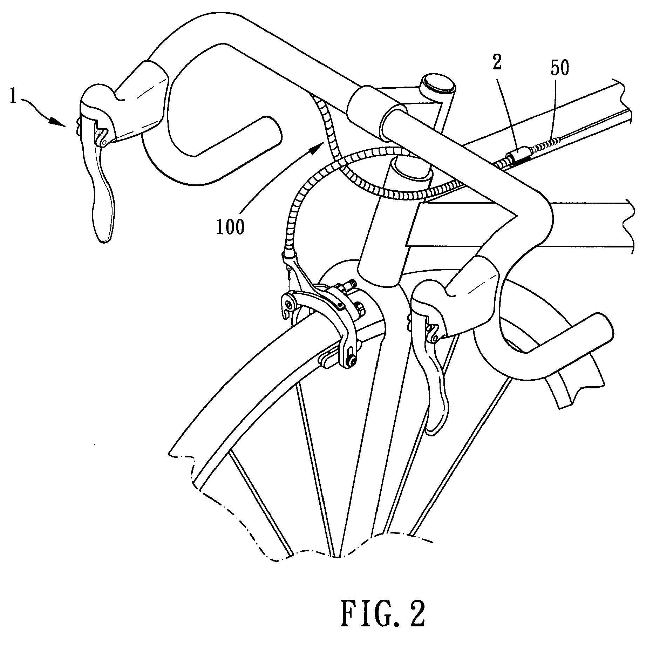

As shown in Figs. 1 and 2 show a vehicle control system 100 according to a preferred embodiment of the present invention. The vehicle control system 100 is for mounting to a vehicle (such as, but is not limited to, bicycle, motorcycle or car). The vehicle has an operable portion 1, at least two fixation portions 2 for holding the vehicle control system 100 and an operated device 3. The operable portion 1 may be a brake lever, shift lever or fluid control operator, and the operated device 3 may be a brake, derailleur or fluid control device.

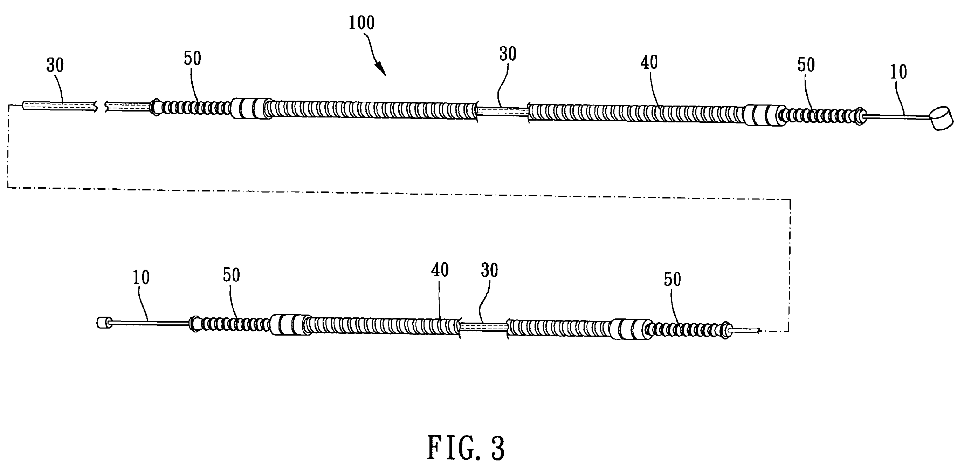

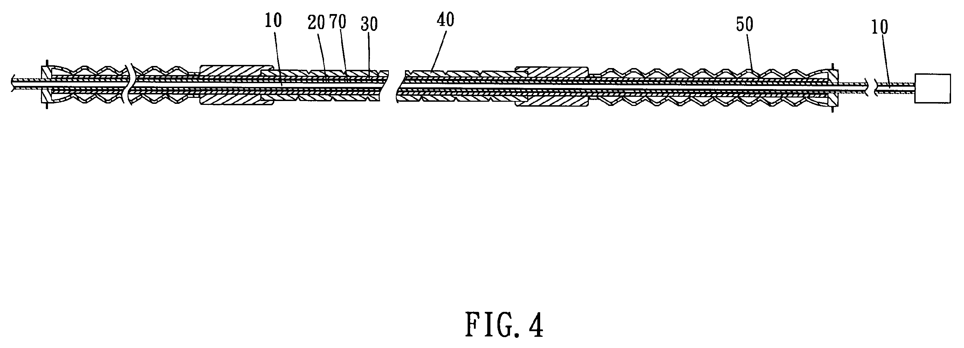

Referring further to Figs. 3 and 4, in this embodiment, the vehicle control system 100 includes a center line 10, a first sleeve 20, a second sleeve 30, an outmost sheath 40 and a plurality of third sleeves 50.

Two ends of the center line 10 are connected to the operable portion 1 and the operated device 3 respectively. The operated device 3 is controllably operated by the operable portion 1 via the center line 10. For example, the center line 10 may be a brake wire, and a brake can be driven by the brake wire to make a brake through moving a brake lever to pull the brake wire. The center line 10 may be made of wires which are wrung and has a twisted circumferential surface, or the center line 10 may be made of a single wire and has a smooth circumferential surface.

The first sleeve 20 is disposed around the center line 10, continuously extends between the operable portion 1 and the operated device 3, and is slidable relative to the center line 10. Preferably, a thin layer having self-lubricating property is disposed at least on inner and outer circumferential surfaces of the first sleeve 20. The thin layer may be made of polytetra fluoroetylene (PTFE, teflon), phenol (PHENOL), ultra-high-molecular-weight polyethylene (UHMW-PE), polypropylene (PP), polyetherether ketone (PEEK), polyphenylene sulfide (PPS) or polychlorotrifluoroethene (PCTFE). The first sleeve 20 may be wholly made of one of the aforementioned self-lubricating materials, or just the inner and outer circumferential surfaces of the first sleeve 20 are provided with two of the aforementioned self-lubricating materials respectively. Preferably, the first sleeve 20 is continuously disposed around substantially an entire length of a section of the center line 10 between the operable portion 1 and the operated device 3, so that the frictional resistance between the center line 10 and the first sleeve 20 having self-lubricating property can be reduced so as to make a motion such as brake easily, smoothly and precisely.

The second sleeve 30 is disposed around the first sleeve 20. In this embodiment, the second sleeve 30 is disposed around substantially an entire length of the first sleeve 20. However, according to various requirements, the second sleeve 30 may be longer or shorter than that the first sleeve 20 in length. Preferably, the second sleeve 30 is made of plastic material such as polyurethane (PU) or polyethelyne (PE) (preferably) so that the second sleeve 30 is pretty stress-proof, vibration-proof, corrosion-proof, abrasion-proof, weather-proof, pliable, light-weight, tensile and bendable. However, the second sleeve 30 may be made of suitable metal or composite material. In this embodiment, the frictional resistance between the first sleeve 20 and the center line 10 is smaller than that between the second sleeve 30 and the first sleeve 20. As such, as the operable portion 1 drives the center line 10 moving axially, the second sleeve 30 is relatively uneasy to move relative to the first sleeve 20, while the center line 10 is relatively easy to move relative to the first sleeve 20, thus reducing the frictional resistance of the axially-moving center line 10 so that the operated device 3 can be operated easily, smoothly and precisely.

Preferably, a lubrication matter 70 such as lubrication oil or the like is disposed between the first sleeve 20 and the center line 10, which can further reduce the frictional resistance between the center line 10 and the first sleeve 20. Additionally, the lubrication matter 70 may further encompass the center line 10 so as to prevent the center line 10 from damping and rusting and enhance the durability of the center line 10. Furthermore, the second sleeve 30 and the first sleeve 20 are slidable relative to each other, and the second sleeve 30 and the outmost sheath 40 are also slidable relative to each other. As a result, as the center line 10 moves axially to, probably, slight led the first sleeve 20, there will be little frictional resistances between the second sleeve 30 and the first sleeve 20 and between the second sleeve 30 and the outmost sheath 40, thus smoothing the movement of the center line 10 and facilitating the assembly of the center line 10, the first sleeve 20 and the second sleeve 30, and providing adequate and sufficient space for bend and deformation of all parts when they are fabricated so that the frictional resistances due to the contact among the center line 10, the first sleeve 20 and the second sleeve 30 are reduced as the vehicle control system is bent or deformed.

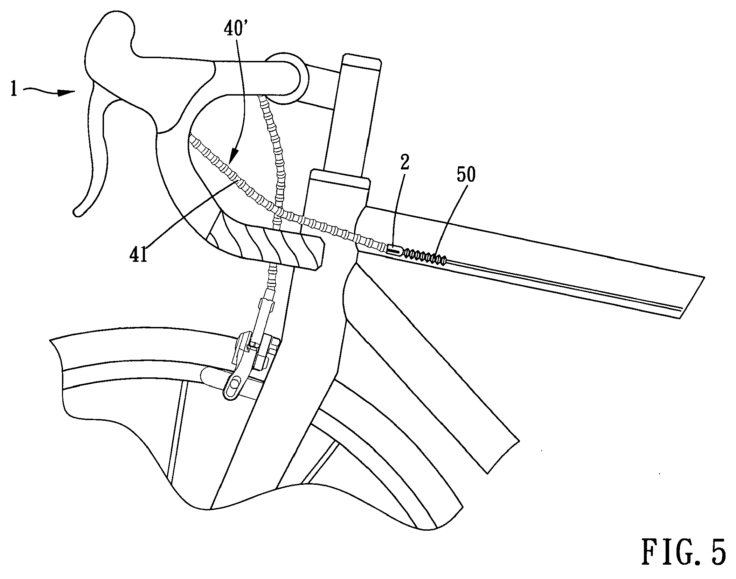

The outmost sheath 40 is disposed around the second sleeve 30, disposed between the operable portion 1 and one of the fixation portions 2, and disposed between the operated device 3 and the other fixation portion 2 (as shown in Fig. 1), which can provide sufficient support, fixation, protection, guidance to the center line 10. However, the outmost sheath 40 may be substantially continuously disposed around an entire length of the second sleeve 30, so as to protect the second sleeve 30 from being damaged by external objects or external forces. Preferably, the outmost sheath 40 is made of aluminum or stainless steel, so as to provide good protection to the center line 10, the first sleeve 20 and the second sleeve 30. In this embodiment, the outmost sheath 40 is made of an elongate member being continuously twisted and is shaped in a generally tubular form. However, in a preferred embodiment as shown Fig. 5, an outmost sheath 40' may include a plurality of shell members 41 detachably sequentially connected along the outmost sheath 40' axially.

Preferably, the third sleeves 50 are disposed respectively around two ends of the center line 10 near the operable portion 1 and the operated device 3, and disposed around portions the center line 10 near the fixation portions 2. It is noted that the third sleeves 50 may be selectively disposed respectively in any required positions. For example, the third sleeves 50 may be disposed around the two ends of the center line 10 near the operable portion 1 and the operated device 3. The third sleeves 50 are preferably axially-deformable and preferably made of plastic material or rubber. Generally, a distal end of the center line 10 near the operated device 3 is connected to the operated device 3 and exposed in the atmosphere, so that water and dust can come into the vehicle control system (the sleeves and sheath) to corrode and jam the vehicle control system, and this can degrade the operation and control performance of the vehicle control system; however, the third sleeves 50 can prevent the entering of water and dust into the vehicle control system 100, so that the center line 10 can be prevented from being damped and rusted and the center line 10 can function well. Since the third sleeves 50 are axially-deformable so that they are suitable to dispose in various spaces. It is noted that the center line 10 may be arranged with only one third sleeve 50 disposed around one end thereof.

It is noted that the structure of the vehicle control system 100 may be suitably modified. For example, the first sleeve 20 is disposed around the center line 10, and no second sleeve is disposed around the first sleeve 20; or a portion between the two fixation portions 2 of the center line 10 is sequentially telescoped with the first sleeve 20 and the second sleeve 30, or sequentially telescoped with the first sleeve 20, the second sleeve 30 and an outmost sheath (may be the aforementioned outmost sheath or an additional outmost sheath). Since the portion between the two fixation portions 2 of the center line 10 is sequentially telescoped with at least the first sleeve 20, the center line 10 can be prevented from being damped and rusted sufficiently and the center line 10 can function well. However, the disposal of the third sleeves 50 can be omitted.

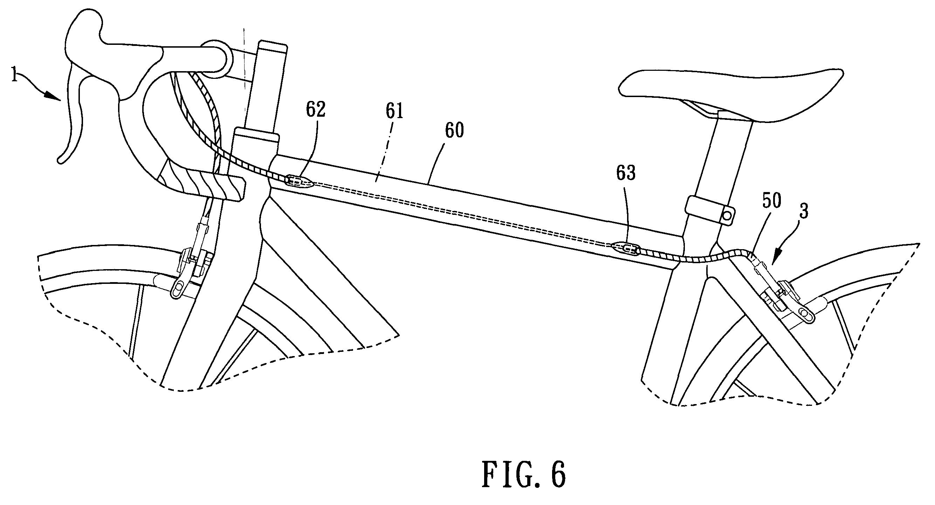

As shown in Fig. 6, in an alternative embodiment, the vehicle has a tube portion 60, wherein the tube portion 60 may be a single tube body or constructed of plural tube bodies. In this embodiment, the tube portion 60 is the top tube of a bicycle, and the tube portion 60 is formed with an inner space 61 and has two fixation portions 62, 63. The two fixation portions 62, 63, in this embodiment, are two openings communicating with the inner space. The telescoped first sleeve and the center line come into the inner space 61 via one of the openings and extend outside the tube portion 60 via the other opening. As such, the effects of preventing the first sleeve and the center line from damping and rusting are further enhanced.

Given the above, through the vehicle control system of the present invention, the center line can be prevented from being damped and rusted so that the center line can function well and the durability of the vehicle control system is enhanced, and the friction caused due to the axial movement of the vehicle control system can be reduced so that the operated device can be operated easily, smoothly and precisely.

Although particular embodiments of the invention have been described in detail for purposes of illustration, various modifications and enhancements may be made without departing from the scope of the invention. Accordingly, the invention is not to be limited except as by the appended claims.

## Claims

1. A vehicle control system (100), for mounting to a vehicle, the vehicle having an operable portion (1), at least two fixation portions (2) for holding the vehicle control system (100) and an operated device (3), the operated device (3) including a brake, derailleur or fluid control device, the vehicle control system (100) including:
a center line (10), two ends thereof being connected respectively to the operable portion (1) and the operated device (3), the operated device (3) being controllably operated by the operable portion (1) via the center line (10);
**characterised by**
a first sleeve (20), disposed around the center line (10), continuously extending between the operable portion (1) and the operated device (3), and being slidable relative to the center line (10); and
an outmost sheath (40), disposed around the first sleeve (20), disposed between the operable portion (1) and one of the fixation portions (2), and disposed between the operated device (3) and the other fixation portion (2).

2. The vehicle control system of claim 1, further including a second sleeve (30) disposed around the first sleeve (20).

3. The vehicle control system of claim 1, wherein the first sleeve (20) is continuously disposed around substantially an entire length of a section of the center line (10) between the operable portion (1) and the operated device (3).

4. The vehicle control system of claim 2, wherein a portion between the two fixation portions (2) of the center line (10) is sequentially telescoped with at least the first sleeve (20) and the second sleeve (30).

5. The vehicle control system of claim 1, wherein a lubrication matter (70) is disposed between the first sleeve (20) and the center line (10).

6. The vehicle control system of claim 2, wherein the second sleeve (30) is made of PE.

7. The vehicle control system of claim 1, wherein the outmost sheath (40) is made of an elongate member being continuously twisted.

8. The vehicle control system of claim 1, wherein the outmost sheath (40) is made of a plurality of shell members (41) detachably sequentially connected along the outmost sheath (40) axially.

9. The vehicle control system of claim 1, wherein at least one third sleeve (50) is disposed around at least one of the two ends of the center line (10).

10. The vehicle control system of claim 2, wherein the second sleeve (30) and the first sleeve (20) are slidable relative to each other.

11. The vehicle control system of claim 1, wherein the vehicle has a tube portion (60), the tube portion (60) is formed with an inner space (61) and includes the at least two fixation portions (62, 63), the at least two fixation portions (62, 63) are two openings communicating with the inner space (61), the telescoped first sleeve (20) and the center line (10) come into the inner space (61) via one of the openings and extend outside the tube portion (60) via the other opening.

## Patentansprüche

1. Fahrzeugsteuerungssystem (100) zur Montage an einem Fahrzeug, wobei das Fahrzeug einen Betätigungsabschnitt (1), wenigstens zwei Befestigungsabschnitte (2) zur Halterung des Fahrzeugsteuerungssystems (100) und eine betätigte Vorrichtung (3) aufweist, wobei die betätigte Vorrichtung (3) eine Bremse, eine Kettenschaltung oder eine Fluid-regeleinrichtung beinhaltet, wobei das Fahrzeugsteuerungssystem (100) beinhaltet:
eine Mittelleitung (10), deren beide Enden entsprechend mit dem Betätigungsabschnitt (1) und der betätigten Vorrichtung (3) verbunden sind, wobei die betätigte Vorrichtung (3) über die Mittelleitung (10) durch den Betätigungsabschnitt (1) kontrollierbar bedient werden kann,
**gekennzeichnet durch**
eine erste Hülse (20), die um die Mittelleitung (10) angeordnet ist, sich kontinuierlich zwischen dem Betätigungsabschnitt (1) und der betätigten Vorrichtung (3) erstreckt und in Bezug auf die Mittelleitung (10) verschiebbar ist, und
eine äußerste Ummantelung (40), die um die erste Hülse (20) angeordnet ist, sich zwischen dem Betätigungsabschnitt (1) und einem der Befestigungsabschnitte (2) befindet und zwischen der betätigten Vorrichtung (3) und dem anderen Befestigungsabschnitt (2) angeordnet ist.

2. Fahrzeugsteuerungssystem nach Anspruch 1, welches ferner eine zweite Hülse (30) beinhaltet, die um die erste Hülse (20) angeordnet ist.

3. Fahrzeugsteuerungssystem nach Anspruch 1, bei welchem die erste Hülse (20) kontinuierlich um im Wesentlichen eine gesamte Länge eines Bereichs der Mittelleitung (10) zwischen dem Betätigungsabschnitt (1) und der betätigten Vorrichtung (3) angeordnet ist.

4. Fahrzeugsteuerungssystem nach Anspruch 2, bei welchem ein Abschnitt zwischen den beiden Befestigungsabschnitten (2) der Mittelleitung (10) sequentiell mit wenigstens der ersten Hülse (20) und der zweiten Hülse (30) ineinandergeschoben ist.

5. Fahrzeugsteuerungssystem nach Anspruch 1, bei welchem ein Schmierstoff (70) zwischen der ersten Hülse (20) und der Mittelleitung (10) vorgesehen ist.

6. Fahrzeugsteuerungssystem nach Anspruch 2, bei welchem die zweite Hülse (30) aus PE hergestellt ist.

7. Fahrzeugsteuerungssystem nach Anspruch 1, bei welchem die äußerste Ummantelung (40) aus einem länglichen Teil hergestellt ist, das kontinuierlich verdrillt ist.

8. Fahrzeugsteuerungssystem nach Anspruch 1, bei welchem die äußerste Ummantelung (40) aus einer Vielzahl von Hüllenteilen (41) hergestellt ist, die abnehmbar sequentiell entlang der äußersten Ummantelung (40) axial verbunden sind.

9. Fahrzeugsteuerungssystem nach Anspruch 1, bei welchem wenigstens eine dritte Hülse (50) um wenigstens eines der beiden Enden der Mittelleitung (10) angeordnet ist.

10. Fahrzeugsteuerungssystem nach Anspruch 2, bei welchem die zweite Hülse (30) und die erste Hülse (20) in Bezug aufeinander verschiebbar sind.

11. Fahrzeugsteuerungssystem nach Anspruch 1, bei welchem das Fahrzeug einen Rohrabschnitt (60) aufweist, wobei der Rohrabschnitt (60) mit einem inneren Raum (61) ausgebildet ist und die wenigstens zwei Befestigungsabschnitte (62, 63) beinhaltet, wobei die wenigstens zwei Befestigungsabschnitte (62, 63) zwei Öffnungen sind, die mit dem inneren Raum (61) in Verbindung stehen, wobei die ineinandergeschobene erste Hülse (20) und die Mittelleitung (10) über eine der Öffnungen in den inneren Raum (61) hineingehen und sich über die andere Öffnung aus dem Rohrabschnitt (60) heraus erstrecken.

## Revendications

1. Système de contrôle de véhicule (100) à monter sur un véhicule, le véhicule ayant une portion exploitable (1), au moins deux portions de fixation (2) pour maintenir le système de contrôle de véhicule (100) et un dispositif exploité (3), le dispositif exploité (3) comprenant un frein, un dérailleur ou un dispositif de contrôle des fluides, le système de contrôle de véhicule (100) comprenant :
une ligne centrale (10), deux extrémités de celle-ci étant reliées respectivement à la portion exploitable (1) et au dispositif exploité (3), le dispositif exploité (3) pouvant être exploité de manière contrôlable par la portion exploitable (1) par l'intermédiaire de la ligne centrale (10), **caractérisé par**
un premier manchon (20), disposé autour de la ligne centrale (10), qui s'étend de manière continue entre la portion exploitable (1) et le dispositif exploité (3), et étant coulissant par rapport à la ligne centrale (10) et
une gaine extérieure (40) disposée autour du premier manchon (20), disposé entre la portion exploitable (1) et l'une des portions de fixation (2) et disposée entre le dispositif exploité (3) et l'autre portion de fixation (2).

2. Système de contrôle de véhicule selon la revendication 1 comprenant de plus un second manchon (30) disposé autour du premier manchon (20).

3. Système de contrôle de véhicule selon la revendication 1, le premier manchon (20) étant disposé de manière continue autour de substantiellement une longueur entière d'une section de la ligne centrale (10) entre la portion exploitable (1) et le dispositif exploité (3).

4. Système de contrôle de véhicule selon la revendication 2, une portion entre les deux portions de fixation (2) de la ligne centrale (10) étant télescopique de manière séquentielle avec au moins le premier manchon (20) et le second manchon (30).

5. Système de contrôle de véhicule selon la revendication 1, un élément de lubrification (70) étant disposé entre le premier manchon (20) et la ligne centrale (10).

6. Système de contrôle de véhicule selon la revendication 2, le second manchon (30) étant fait en PE.

7. Système de contrôle de véhicule selon la revendication 1, la gaine extérieure (40) étant faite en un élément allongé qui est torsadé de manière continue.

8. Système de contrôle de véhicule selon la revendication 1, la gaine extérieure (40) étant faite en une pluralité d'éléments d'enveloppe (41) reliés de manière détachable de manière séquentielle le long de la gaine extérieure (40) de manière axiale.

9. Système de contrôle de véhicule selon la revendication 1, au moins un troisième manchon (50) étant disposé autour d'au moins l'une des deux extrémités de la ligne centrale (10).

10. Système de contrôle de véhicule selon la revendication 2, le second manchon (30) et le premier manchon (20) étant coulissants l'un par rapport à l'autre.

11. Système de contrôle de véhicule selon la revendication 1, le véhicule ayant une portion de tube (60), la portion de tube (60) étant formée avec un espace intérieur (61) et comprenant les deux portions de fixation qui existent au moins (62, 63), les deux portions de fixation qui existent au moins (62, 63) étant deux ouvertures qui communiquent avec l'espace intérieur (61), le premier manchon télescopique (20) et la ligne centrale (10) entrant dans l'espace intérieur (61) par l'intermédiaire d'une des ouvertures et s'étendant à l'extérieur de la portion de tube (60) par l'intermédiaire de l'autre ouverture.
